# EUROPEAN PATENT APPLICATION

(11) **EP 3 620 317 A1**
(43) Date of publication of application: **11.03.2020**
(21) Application number: 19195325.6
(22) Date of filing: 04.09.2019
(51) Int. Cl.: B60H 1/00, F16K 11/048, F16K 11/052, B01D 46/00, B60H 3/06

(54) **AIR TREATMENT APPARATUS AND VALVE MECHANISM**

(30) Priority: 07.09.2018 GB 201814571
(71) Applicant: AGCO International GmbH, 8212 Neuhausen am Rheinfall (CH)
(72) Inventor: HAF, Dietmar, 87616 Marktoberdorf (DE)
(74) Representative: AGCO Intellectual Property Department

(57) **Abstract**

A valve mechanism (22) for an air treatment apparatus, the valve mechanism (22) has a valve chamber (40) with a fluid outlet (42) and first and second fluid inlets (44, 46), each fluid inlet (44, 46) has a respective valve seat (48, 50) disposed on the exterior of the valve chamber (40) around the inlet (44, 46), each fluid inlet (44, 46) also has a respective valve body (52, 54) movable into engagement with the respective valve seat (48, 50) to close the inlet (44, 46), the valve bodies (52, 54) are rigidly connected by a joining body (56) which extends through the fluid inlets (44, 46) and has a length greater than the separation of the valve seats (48, 50), such that one fluid inlet (44, 46) is opened by the closing of the other.

## Description

### FIELD OF THE INVENTION

The present invention relates to an air treatment apparatus and a valve mechanism for use in the same, in particular an air treatment apparatus for an operator environment or cab of an agricultural vehicle or a similar vehicle.

### BACKGROUND

Agricultural vehicles are known to operate in environments in which many different kinds of particulate or contaminant are present. This creates a requirement for filtration of the air for operators of such vehicles when in use. The particulates may be of different sizes and of different natures, for example larger particulates such as dust, pollen and the like and smaller contaminants such as fumes, aerosols and vapours.

It is known to provide separate air filters to provide selective filtering of the air supply to a vehicle operator. For example a first filter may be used when the predominant contaminant in the working environment of the agricultural vehicle is relatively large (for example dust stirred up when traversing a field) and a second filter is used when the predominant contaminant in the working environment is relatively small (for example when applying a herbicide, pesticide or similar).

Also, legislation in various countries now requires the use of filters of a particular rating to filter out particular contaminants from the air introduced into the operator environment or cabin of the agricultural vehicle. For example in the EU, EU Standard EN 15695 provides for four categories of filter for cabin protection, where Category 2 protects only against dust but does not protect against aerosols and vapours, Category 3 protects against dust and aerosol, but not vapours and Category 4 protects against dust, aerosols and vapours. In this context, Category 3 filters tend to be more expensive than Category 2 filters, with Category 4 being most expensive. Accordingly, it is beneficial to the working life of the higher rated filters if they can be cleaned rather than replaced. It is a further advantage if such filters can be cleaned when in service on the agricultural vehicle rather than being removed while being cleaned (requiring replacement during cleaning or enforced downtime of the agricultural vehicle).

The present applicants International patent application WO2019/120902 describes an air filtration apparatus having two filters in parallel, with a valve mechanism arranged to connect either one to an HVAC (heating, ventilation, air-conditioning) system whilst the other is being cleaned. There is a need for a suitable robust design of valve mechanism for such a system.

### SUMMARY OF THE INVENTION

In accordance with a first aspect of the invention there is provided a valve mechanism for an air treatment apparatus, the mechanism comprising a valve chamber having a fluid outlet and first and second fluid inlets, wherein each fluid inlet has a respective valve seat disposed on the exterior of the valve chamber around the inlet, wherein each fluid inlet has a respective valve body movable into engagement with the respective valve seat to close the inlet, and wherein the first and second valve bodies are rigidly connected by a joining body which extends through the fluid inlets and has a length greater than the separation of the valve seats. This arrangement provides a simple and robust construction where movement of the joining body to bring one of the valve bodies into engagement with its respective valve seat, thereby closing that inlet, simultaneously acts to open the other inlet.

The valve mechanism joining body may be substantially straight, with the valve seats lying in substantially parallel planes. The joining body may be a single piece, or may comprise two or more joining body parts extending substantially parallel to each other between the first and second valve bodies.

The valve mechanism may further comprise an actuator connected to one of the valve bodies by a linkage, which actuator is operable to move the valve body into engagement with the respective valve seat, wherein the linkage and actuator are located outside of the valve chamber, preferably in an area of a filter device outlet.

Preferably, the joining body is curved and each of the valve bodies extends substantially perpendicularly from a respective end of the joining body. In such an arrangement, the joining body may define an arc about an axis of rotation with the valve seats lying in respective planes, which planes intersect on a line substantially coincident with the axis of rotation, and the mechanism may further comprise a mounting body having a first end attached to one of the valve bodies and a second end pivotably attached to the valve chamber at or close to the axis of rotation. The mounting body and an actuator operable to move the mounting body are preferably located outside of the valve chamber, in an area of a filter device outlet.

In accordance with a further aspect of the invention there is provided an air treatment apparatus for an operator environment of an agricultural vehicle in which air to be filtered is drawn into an air filtration system, filtered and directed to an agricultural vehicle HVAC system, which HVAC system comprises an inlet plenum, a blower, other HVAC components and an outlet to the operator environment;
wherein the air filtration system comprises;
at least one external inlet;
a first filtration device having a first relatively coarser level of filtration located between the external inlet and the HVAC inlet plenum;
a second filtration device having a second relatively finer level of filtration located between the external inlet or a further external inlet and the HVAC inlet plenum;
an air filtration system blower connected to the HVAC inlet plenum; and
a valve mechanism according to the first aspect of the invention, the valve mechanism having its first input connected to an output of the first filtration device, its second input connected to an output of the second filtration device, and its output connected to the inlet plenum of the HVAC system such that in use an air flow is directed from one or the other of the filtration devices to the HVAC inlet plenum.

Preferably, the air treatment apparatus further comprises a bypass connected at a second end adjacent the second filtration device such that in use when the valve mechanism connects the first filtration device to the HVAC inlet plenum a portion of an air flow through the air treatment apparatus is redirected to purge the second filtration device.

There are two advantages of this arrangement. Firstly, the under pressure provided by the blowers sucks the valve mechanism, especially the valve bodies, against the fluid inlets and therefore helps to achieve an air tightness between the valve chamber and the filter outlet area. Secondly, as the valve chamber needs to be absolutely air tight to prevent drawing of contaminated air into the cabin, the mounting body or linkage is not placed in the valve chamber but in the filter outlet area. Therefore it is not needed to seal the mounting body or linkage because the filter outlet area belongs to the not sealed ambient area.

### BRIEF DESCRIPTION OF THE DRAWINGS

Embodiments of the present invention will now be described by way of example only, and with reference to the accompanying drawings, in which:
Figure 1 shows a schematic view of a first embodiment of an air filtration apparatus in a first operating condition;
Figure 2 shows a schematic view of the air filtration apparatus of Figure 1 in a second operating condition;
Figure 3 shows a schematic view of a first embodiment of valve mechanism used in the apparatus of Figs. 1 and 2, with Figure 3A showing an alternate arrangements of valve seat;
Figure 4 is a schematic representation of a second embodiment of valve mechanism for use in the apparatus of Figs. 1 and 2; and
Figures 5 to 8 are perspective views, with some components omitted, of the second embodiment of valve mechanism.

### DETAILED DESCRIPTION OF SPECIFIC EMBODIMENTS OF THE INVENTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description.

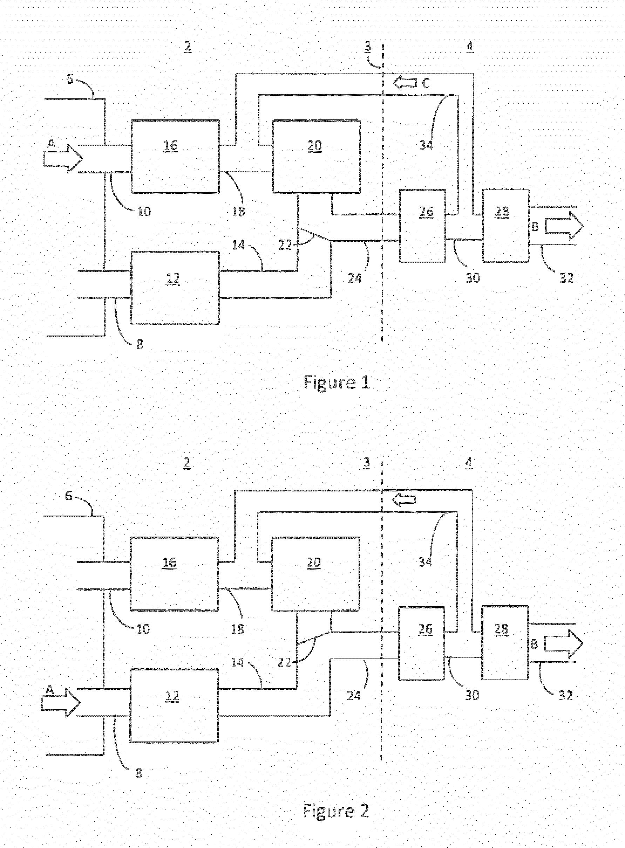

With reference to Figures 1 and 2, a schematic view of a first embodiment of an air filtration apparatus is shown comprising an air filtration system 2 (to the left of the dashed line 3) connected to an HVAC system 4 (to the right of the dashed line 3) for an operator environment or cabin of an agricultural vehicle.

An external inlet 6 is shown feeding a first vent or duct 8 and a second vent or duct 10 by which air to be filtered is drawn into the filtration system. In an alternative embodiment (not shown) the first and second vents or ducts 8, 10 may be provided with individual external inlets. The external inlet 6 may conveniently be located in a roof housing of the cabin of the agricultural vehicle.

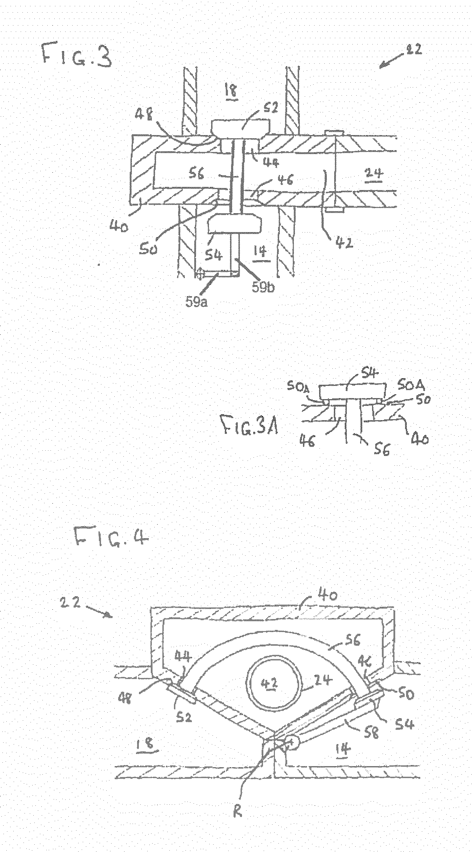

The first vent or duct 8 is directed to a first filtration device 12 having a first relatively coarser level of filtration. The first filtration device 12 is conveniently suitable for extracting dust particles and the like from the externally fed air. By way of example, this may be a Category 2 dust filter. The first filtration device 12 is provided with an outlet 14. The outlet 14 is connected to a first inlet side of a valve mechanism 22 (described in further detail below with reference to Figures 3 to 7).

The second vent or duct 10 is directed to a second filtration device 16 having a second relatively finer level of filtration. The second filtration device 16 is conveniently suitable for extracting dust, aerosols, vapour and the like from the externally fed air. By way of example, this may be a Category 4 filter. The second filtration device 16 is provided with an outlet 18. An air filtration system blower 20, conveniently a fresh air blower, is associated with the second filtration device 16. The air filtration system blower 20 is provided with an inlet connected to the outlet 18 of the second filtration device 16 and an outlet connected to a second inlet side of the valve mechanism 22.

The valve mechanism 22 is provided with an outlet conduit 24. The valve mechanism allows air flow from the second filtration device 16 to the outlet conduit 24 while isolating the first filtration device 12 (as in Fig. 1) or, alternatively allows air flow from the first filtration device 12 to the outlet conduit 24 while isolating the second filtration device 16 (as in Fig. 2).

The valve mechanism 22 may be operated by any convenient means, for example automatically following a suitable signal received from a suitable sensor, automatically following actuation of a suitable device for example a sprayer, or by the direct action of a driver actuating suitable means within the cab.

In Figures 1 and 2 the outlet conduit 24 is connected to an inlet plenum of the HVAC system and in particular connects the outlet conduit 24 to a blower 26 of the HVAC system ('HVAC system blower').

The HVAC system typically includes additional components 28 downstream of the blower 26, such as by way of example a evaporator and a heater. The HVAC blower 26 is provided with a connecting conduit 30 to direct the air flow through the other components before delivery to the cabin by way of a cabin air supply duct 32.

A first end of a bypass channel or passage 34 is connected to the connecting conduit 30. A second end of the bypass channel or passage 34 is located between the second filtration device 16 and the associated air filtration system blower 20.

A further air recirculation path is provided by a conduit (not shown) extending between the cabin and the outlet conduit 24.

The typical operating position of the valve mechanism 22 is that shown in Figure 2, with the inlet air being drawn through the coarser (and cheaper) filter 12. However, when there is a need to extract aerosols, vapour and the like the system is switched to the configuration shown in Figure 1.

To adopt the configuration shown in Figure 1, the valve mechanism 22 is moved to the position shown and the air filtration system blower 20 is also actuated. Air is drawn into the air filtration system through the second vent or duct 10 (arrow A) and drawn through the second filtration device 16 to remove dust, aerosols, vapour and the like entrained in the air. The air is directed through the valve mechanism 22 to the outlet conduit 24 and then drawn by the HVAC system blower 26 into the HVAC system and onward to the cabin air supply duct 32 (arrow B). In this position, the valve mechanism 22 prevents communication between the first filtration device 12 and the HVAC blower 26. A first volume of underpressure (low pressure) is formed between the second filtration device 16 and the air filtration system blower 20. Since the HVAC blower 26 is stronger than the air filtration system blower 20, a second volume of underpressure is created between the air filtration system blower 20 and the HVAC blower 26.

Due to an overpressure created in this situation on the HVAC system side, some of the air drawn into the HVAC system will recirculate through the bypass 34 (arrow C) into the region between the second filtration device 16 and the air filtration system blower 20 to mix with the freshly filtered air from the second filtration device 16 before being drawn by the air filtration system blower 20 toward the HVAC blower.

Once the need to extract aerosols, vapour and the like has passed, the valve mechanism 22 is caused to adopt the position shown in Figure 2 (the air filtration system blower 20 is also deactivated). In this position, the valve mechanism 22 prevents air flowing from the second filtration device 16 past the air filtration system blower 20 to the inlet plenum of the HVAC blower 26.

Air is drawn into the air filtration system through the first vent or duct 8 (arrow A) and directed through the first filtration device 12 to remove dust and the like entrained in the air. The air passes through the valve mechanism 22 to the outlet conduit 24 and most is then drawn by the HVAC system blower 26 into the HVAC system and out through the cabin air supply duct 32 (arrow B).

In addition, again due to the overpressure a portion of the air drawn into the HVAC system is drawn or recirculated through the bypass channel or passage 34 (arrow C) to the region between the second filtration unit 16 and the air filtration system blower 20, where, due to sealing of the air filtration system blower 20 in its inactive state, the recirculated air is directed back through the second filtration device 16, thereby removing trapped dust, vapour and aerosol particles and the like from the second filtration device 16 and directing these back out through vent or duct 10.

This has as an advantage that the air filtered by the first filtration device 12 is used to clean the second filtration device 16. It can be seen that the second filtration device 16 is being cleaned whenever the first filtration device 12 is in operation. It is a further advantage, with the first filtration device 12 connected to the HVAC system and the air filtration system blower 20 associated with the second filtration device 16 inactive, that the use of the portion of the treated air to clean the second filtration device 16 results in a gentler cleaning action than if the air filtration system blower associated with the second filtration device 16 is reversed to drive air back through the second filtration device 16. This results in a prolonged life for the second filtration device 16.

As described in the above-mentioned International patent application WO2019/120902, variations on the layout of Figures 1 and 2 are possible. In a first variant, the air filtration system blower 20 is downstream of the valve mechanism 22, coupled to the inlet plenum of the HVAC blower 26. In a second variant, an outlet of the air filtration system blower 20 directs air through the bypass channel or passage 34 (arrow C) to the region between the second filtration unit 16 and inlet to the air filtration system blower 20.

Figure 3 represents a first embodiment of the valve mechanism 22. The mechanism comprises a valve chamber 40 having a fluid outlet 42 coupled with the outlet conduit 24, and first 44 and second 46 fluid inlets respectively coupled with the filter device outlets 18, 14. Each of the fluid inlets 44, 46 has a respective valve seat 48, 50 disposed on the exterior of the valve chamber around the inlet. Each of the fluid inlets 44, 46 also has a respective valve body 52, 54 movable into engagement with the respective valve seat 48, 50 to close the inlet. The first and second valve bodies 52, 54 are rigidly connected by a substantially straight joining body which extends through the fluid inlets 42, 44. The joining body 56 has a length greater than the separation of the valve seats 48, 50 so that closing of one of the inlets 44 results in the opening of the other 46.

An actuator (not shown) moves the valve bodies 52, 54 and joining body 56 by means of a linkage consisting of two links 59a, 59b which are located in the area outside of the valve chamber 40, in the area of the filter device outlet 14. The two links 59a, 59b are pivotably connected to each other, with one link 59a pivotably connected to the housing of chamber 40 and the other 59b pivotably connected to the valve body 54.

The valve seating in the embodiment of Figure 3 may comprise a chamfered portion of the valve body 52 cooperating with a corresponding chamfered recess 48 in the body of the valve chamber 40 as shown, but it will be understood that other arrangements are possible. For example, as shown in Figure 3A, the valve body 54 and valve chamber 40 may present substantially flat and parallel surfaces and the valve seat 50 may be simply provided by the two surfaces meeting, or additional sealing means such as a rubber seal, grommet or washer 50A may be provided around the opening 46.

Figures 4 to 8 illustrate an alternative embodiment of the valve mechanism 22. Those components performing the same function as in the Fig. 3 embodiment are identified by the same reference numerals. In this embodiment, the joining body 56 is curved and each of the valve bodies 52, 54 extends in the manner of a flange substantially perpendicularly from a respective end of the joining body. Suitably, the joining body 56 defines an arc about an axis of rotation R and the valve seats 48, 50 lie in respective planes, which planes intersect on a line substantially coincident with the axis of rotation. Supporting the valve bodies and joining body there is a mounting body 58 having a first end attached to one of the valve bodies 52, 54 and a second end pivotably attached to the valve chamber 40, close to the axis of rotation R, but outside of the chamber 40 and in the outlet area 14 of the first filtration device. As before, movement of one of the valve bodies 52 into engagement with its respective valve seat 48 to close the inlet 44 will cause the other of the valve bodies 54 to disengage from its respective valve seat 50 and open the other inlet 46.

The valve seating configurations may take various forms as described above. Also, it will be understood that the plane in which the respective valve seats lie may not be aligned with the axis of rotation R. Such planes may be angled with respect to the axis R if the valves bodies are similarly angled such that they effect a seal when the two are brought into conjunction.

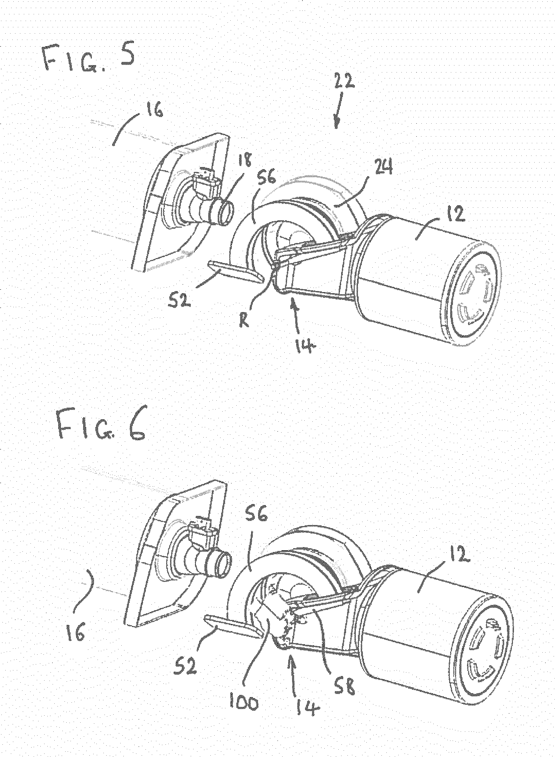

Figure 6 shows the valve mechanism 22 with an actuator 100 which controls movement of the mounting body 58 to close either one of the inlets 44, 46 with the respective valve body 52, 54. The actuator 100 and the mounting body 58 are located outside of valve chamber 40 and in the area of the filter outlet 14. The actuator 100 can be operated directly by a driver of the vehicle and/or may be operated automatically (e.g. in response to a signal received from suitable sensors).

A similar actuator to that at 100 is suitably used to control movement of the two links 59a, 59b in the embodiment of Fig. 3, with the links 59a, 59b and actuator again being located outside of the valve chamber 40 and in the area of the filter outlet 14.

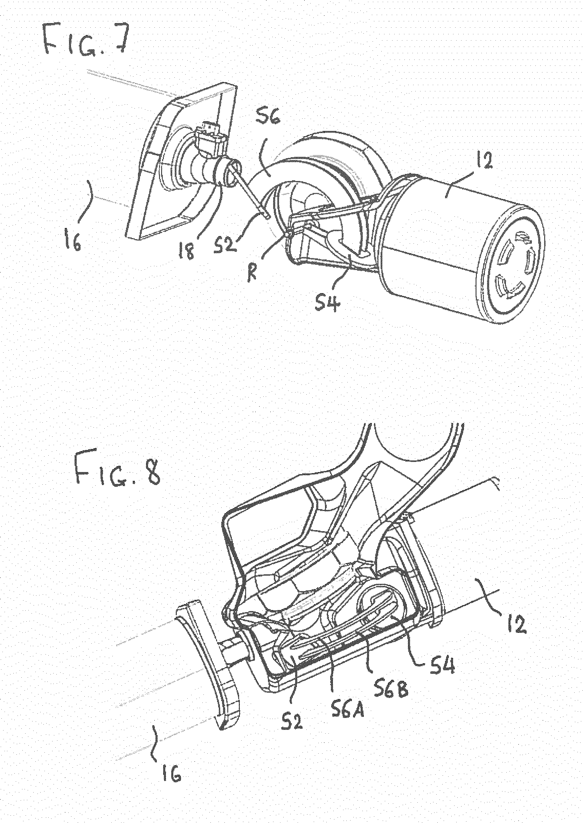

Whilst the joining body 56 may be a single piece, as shown in Figure 8 particularly, it may comprise two or more joining body parts 56A, 56B extending substantially parallel to each other between the first and second valve bodies 52, 54, optionally with cross-bracing between (not shown), in order to provide a rigid connection whilst reducing weight.

In the foregoing the applicants have described a valve mechanism 22 provided for an air treatment apparatus, together with an air treatment apparatus employing the same. The valve mechanism 22 has a valve chamber 40 with a fluid outlet 42 and first and second fluid inlets 44, 46. Each fluid inlet 44, 46 has a respective valve seat 48, 50 disposed on the exterior of the valve chamber around the inlet. Each fluid inlet 44, 46 also has a respective valve body 52, 54 movable into engagement with the respective valve seat to close the inlet. The first and second valve bodies 52, 54 are rigidly connected by a joining body 56 which extends through the fluid inlets 44, 46 and has a length greater than the separation of the valve seats, such that one fluid inlet is opened by the closing of the other.

From reading of the present disclosure, other modifications will be apparent to those skilled in the art and the scope of the invention is limited only by the following claims.

## Claims

**1.** A valve mechanism (22) for an air treatment apparatus, the mechanism comprising a valve chamber (40) having a fluid outlet (42) and first and second fluid inlets (44, 46), wherein each fluid inlet (44, 46) has a respective valve seat (48, 50) disposed on the exterior of the valve chamber (40) around the inlet, wherein each fluid inlet (44, 46) has a respective valve body (52, 54) movable into engagement with the respective valve seat (48, 50) to close the inlet, and wherein the first and second valve bodies (52, 54) are rigidly connected by a joining body (56) which extends through the fluid inlets (44, 46) and has a length greater than the separation of the valve seats (48, 50).

**2.** A valve mechanism as claimed in claim 1, wherein the joining body (56) is substantially straight and the valve seats (48, 50) lie in substantially parallel planes.

**3.** A valve mechanism as claimed in claim 1, wherein the joining body (56) is curved and each of the valve bodies (52, 54) extends from a respective end of the joining body (56).

**4.** A valve mechanism as claimed in claim 3, wherein each of the valve bodies (52, 54) extends substantially perpendicularly from a respective end of the joining body (56).

**5.** A valve mechanism as claimed in claim 3 or claim 4, wherein the joining body (56) defines an arc about an axis of rotation (R) and the valve seats (48, 50) lie in respective planes, which planes intersect on a line substantially coincident with the axis of rotation (R).

**6.** A valve mechanism as claimed in claim 5, further comprising a mounting body (58) having a first end attached to one of the valve bodies (52, 54) and a second end pivotably attached to the valve chamber (40) housing.

**7.** A valve mechanism as claimed in claim 6, wherein the mounting body (58) and an actuator (100) operable to move the mounting body (58) are located outside of the valve chamber (40).

**8.** A valve mechanism as claimed in claim 7, wherein the mounting body (58) and the actuator (100) are located in an area of a filter device outlet (14).

**9.** A valve mechanism as claimed in claim 2, further comprising an actuator connected to one of the valve bodies (54) by a linkage (59a, 59b) and operable to move the valve body (54) into engagement with the respective valve seat (50), wherein the linkage (59a, 59b) and actuator are located outside of the valve chamber (40).

**10.** A valve mechanism as claimed in claim 9, wherein the linkage (59a, 59b) and the actuator (100) are located in an area of a filter device outlet (14).

**11.** A valve mechanism as claimed in any preceding claim, wherein the joining body (56) comprises two or more joining body parts (56A, 56B) extending substantially parallel to each other between the first and second valve bodies (52, 54).

**12.** An air treatment apparatus for an operator environment of an agricultural vehicle in which air to be filtered is drawn into an air filtration system, filtered and directed to an agricultural vehicle HVAC system (4), which HVAC system comprises an inlet plenum, a blower (26), other HVAC components (28) and an outlet (32) to the operator environment;
wherein the air filtration system comprises;
at least one external inlet (6);
a first filtration device (12) having a first relatively coarser level of filtration located between the external inlet (6) and the HVAC inlet plenum;
a second filtration device (14) having a second relatively finer level of filtration located between the external inlet (6) or a further external inlet and the HVAC inlet plenum;
an air filtration system blower (20) connected to the HVAC inlet plenum; and
a valve mechanism (22) as claimed in any preceding claim, the valve mechanism having its first input (44) connected to an output (14) of the first filtration device (12), its second input (46) connected to an output (18) of the second filtration device (16), and its output (42, 24) connected to the inlet plenum of the HVAC system such that in use an air flow is directed from one or the other of the filtration devices to the HVAC inlet plenum.

**12.** An air treatment apparatus according to claim 12, wherein the air treatment apparatus further comprises a bypass (34) connected at a second end adjacent the second filtration device (16) such that in use when the valve mechanism (22) connects the first filtration device (14) to the HVAC inlet plenum a portion of an air flow through the air treatment apparatus is redirected to purge the second filtration device (16).
